# EUROPEAN PATENT APPLICATION

(11) **EP 4 838 263 A1**
(43) Date of publication of application: **11.11.2026**
(21) Application number: 24915129.1
(22) Date of filing: 20.12.2024
(51) Int. Cl.: G01S 19/13, G01C 11/02

(54) **GNSS RECEIVER AND SURVEYING AND MAPPING DEVICE**

(30) Priority: 03.01.2024 CN 202410010612
(71) Applicant: Shanghai Huace Navigation Technology Ltd, Shanghai 201702 (CN); Wuhan Huace Satellite Technology Co., Ltd., Wuhan, Hubei 430223 (CN)
(72) Inventor: GUO, Yanwei, Shanghai 201702 (CN); LIU, Qianzhuang, Shanghai 201702 (CN); AN, Haiming, Shanghai 201702 (CN); HUANG, Renzhi, Shanghai 201702 (CN); LIANG, Shan, Shanghai 201702 (CN); LIU, Qiancheng, Shanghai 201702 (CN); LIU, Xiaoyan, Shanghai 201702 (CN); LI, Yilin, Shanghai 201702 (CN); SHEN, Zhaoxiang, Shanghai 201702 (CN); WANG, Menglin, Shanghai 201702 (CN); YANG, Ye, Shanghai 201702 (CN); YU, Wenyang, Shanghai 201702 (CN); ZHOU, Wenbo, Shanghai 201702 (CN); ZHOU, Xiaofei, Shanghai 201702 (CN)
(74) Representative: De Arpe Tejero, Manuel
(86) International application number: PCT/CN2024/141083
(87) International publication number: WO 2025/145914

(57) **Abstract**

The present disclosure provides a GNSS receiver (1) and a surveying and mapping device (100), wherein, the GNSS receiver (1) comprises an upper housing (11), a lower housing (12), and a first camera (112). The upper housing (11) is connected to the lower housing (12) to form an accommodating cavity (10), the upper housing (11) is provided with a first camera window (111), and the first camera (112) is disposed in the accommodating cavity (10) and arranged corresponding to the first camera window (111). The technical solution of the present disclosure reduces the risk that the first camera (112) is affected by obstacles below the GNSS receiver (1) during imaging, thereby enabling the GNSS receiver (1) to have higher measurement data reliability, that is, higher camera measurement accuracy, thus improving the accuracy and reliability of positioning and calculation results of the GNSS receiver (1).

## Description

### CROSS-REFERENCE TO RELATED APPLICATIONS

This disclosure claims the priority of the Chinese patent application with application number 2024100106122, titled "GNSS RECEIVER AND SURVEYING AND MAPPING DEVICE", filed with the China National Intellectual Property Administration on January 03, 2024, the entire contents of which are incorporated herein by reference.

### TECHNICAL FIELD

The present disclosure relates to the field of GNSS technology, and in particular, to a GNSS receiver and a surveying and mapping device.

### BACKGROUND

A GNSS receiver is a surveying and measurement device based on the global navigation satellite system. Currently, GNSS receivers are widely used in various fields. For example, in navigation, aerospace, and geographic surveying, GNSS receivers are indispensable tools. Meanwhile, they are also widely used in agriculture, transportation, environmental monitoring, earthquake early warning, and other fields.

The development of GNSS receivers needs to consider multiple factors simultaneously, such as parameters including measurement accuracy, weight, and durability. In addition, the reliability of measurement data during the use of GNSS receivers is also one of the key factors to be considered.

GNSS receivers typically combine satellite navigation and photogrammetry technology to obtain high-precision three-dimensional coordinates. By receiving signals transmitted from multiple satellites, processing and analyzing the signals, and then using the measurement data for position calculation, GNSS receivers are used for precision geodetic surveying and precision engineering surveying, among others. Therefore, GNSS receivers have relatively high requirements for the accuracy of camera measurement. Existing GNSS receivers usually have a camera that images downward or backward after the centering rod is lifted, thereby acquiring measurement data.

However, in certain scenarios, obstacles such as tree shade or other structures, for example, roof canopies, signboards, etc., often appear below the GNSS receiver, thereby blocking the imaging path of the camera, which affects the accuracy of the camera measurement of the GNSS receiver, and further affects the accuracy and reliability of the positioning and calculation results of the GNSS receiver.

Therefore, in the development of GNSS receivers, how to improve the measurement data reliability of GNSS receivers is a technical problem that urgently needs to be solved in GNSS receiver technology.

### SUMMARY

The purpose of the present disclosure is to provide a GNSS receiver and a surveying and mapping device with higher measurement data reliability.

The present disclosure is achieved through the following technical solutions:
In a first aspect, the present disclosure provides a GNSS receiver comprising an upper housing, a lower housing, and a first camera. The upper housing is connected to the lower housing to form an accommodating cavity. The upper housing is provided with a first camera window. The first camera is disposed in the accommodating cavity and arranged corresponding to the first camera window.

The technical solution of the embodiments of the present disclosure provides the first camera window on the upper housing and arranges the first camera corresponding to the first camera window, so that the first camera images through the first camera window to enable the GNSS receiver to acquire measurement data. This reduces the risk that the first camera is affected by obstacles below the GNSS receiver during imaging, thereby enabling the GNSS receiver to have higher measurement data reliability, that is, higher camera measurement accuracy, thus improving the accuracy and reliability of the positioning and calculation results of the GNSS receiver.

In some embodiments, the first camera window is disposed in a central area of the upper housing.

The technical solution of the embodiments of the present disclosure disposes the first camera window in the central area of the upper housing, so that the first camera can acquire measurement data along a vertical direction during imaging. This reduces the risk that the first camera is blocked by the upper housing during imaging, thereby enabling the first camera to have a wider imaging angle and improving the imaging range.

In some embodiments, the GNSS receiver further comprises a lens, and the lens is disposed at the first camera window.

The technical solution of the embodiments of the present disclosure disposes the lens at the first camera window to shield the first camera. On one hand, this reduces the risk that external impurities contaminate the lens and impair imaging quality, or the risk that the first camera is damaged and affects the normal operation of the GNSS receiver. On the other hand, it prevents internal components from being exposed via the first camera window and compromising the device's exterior, while enhancing its overall aesthetics..

In some embodiments, the GNSS receiver further comprises a main board and an antenna. Both the main board and the antenna are disposed in the accommodating cavity. The first camera is electrically connected to the main board. The antenna is disposed on a side of the main board facing the first camera window, and the antenna is provided with a first through hole through which the first camera passes.

The technical solution of the embodiments of the present disclosure arranges the main board to exchange information with the camera and arranges the antenna to receive satellite positioning signals. Meanwhile, the antenna is provided with the first through hole to accommodate the first camera passing through, reducing the risk of interference between the first camera and the antenna when the first camera is arranged corresponding to the first camera window.

In some embodiments, the GNSS receiver further comprises an antenna bracket. The antenna bracket is disposed between the antenna and the main board, and the antenna bracket is provided with a second through hole in which the first camera is disposed.

The technical solution of the embodiments of the present disclosure disposes the antenna bracket between the antenna and the main board, reducing the risk of signal interference between the main board and the antenna. Meanwhile, the antenna bracket is provided with the second through hole to accommodate the first camera, reducing the risk of interference between the first camera and the antenna bracket when the first camera is arranged corresponding to the first camera window.

In some embodiments, the antenna bracket comprises a bracket body and a protruding portion connected to each other. The protruding portion protrudes from a side of the bracket body facing the antenna, and the protruding portion passes through the first through hole. The second through hole penetrates through the bracket body and the protruding portion.

The technical solution of the embodiments of the present disclosure has the protruding portion protruding from one side of the bracket body and passing through the antenna, with the second through hole penetrating through the bracket body and the protruding portion. That is, when the first camera is disposed in the first through hole, the protruding portion is sleeved around the first camera, reducing the risk of damage to the first camera and improving the reliability of the GNSS receiver.

In some embodiments, the first camera is in clearance fit with the second through hole.

The technical solution of the embodiments of the present disclosure achieves clearance fit between the first camera and the second through hole, further reducing the risk of interference between the first camera and the antenna bracket, thereby reducing the risk of damage to the first camera and improving the reliability of the GNSS receiver.

In some embodiments, the GNSS receiver further comprises a shielding plate, and the shielding plate covers an end of the second through hole close to the main board.

The technical solution of the embodiments of the present disclosure disposes the shielding plate at the end of the second through hole close to the main board, reducing the risk of signal interference between the main board and the antenna through the second through hole.

In some embodiments, the GNSS receiver further comprises a first foam and a second foam. One side of the shielding plate is connected to the first camera through the first foam, and the other side of the shielding plate is connected to the main board through the second foam.

The technical solution of the embodiments of the present disclosure connects the first camera and the shielding plate through the first foam, and connects the main board and the shielding plate through the second foam. On one hand, this achieves positioning of the shielding plate so that the shielding plate can be fixed at the end of the second through hole close to the main board, reducing the risk of signal interference between the main board and the antenna. On the other hand, this achieves positioning of the first camera, reducing the risk of displacement of the first camera affecting the imaging effect, and improving the accuracy and reliability of the positioning and calculation results of the GNSS receiver.

In some embodiments, the GNSS receiver further comprises a circuit board. One end of the circuit board is connected to the first camera, and the other end of the circuit board is connected to the main board.

The technical solution of the embodiments of the present disclosure connects the first camera and the main board through the circuit board, thereby achieving information exchange between the first camera and the main board.

In some embodiments, the GNSS receiver further comprises an adapter. The circuit board comprises a first circuit board and a second circuit board. One end of the first circuit board is connected to the first camera, and the other end of the first circuit board is connected to the adapter. One end of the second circuit board is connected to the adapter, and the other end of the second circuit board is connected to the main board.

The technical solution of the embodiments of the present disclosure connects the first circuit board and the second circuit board through the adapter, thereby achieving information exchange between the first camera and the main board. This reduces the risk that the limited length of a single circuit board affects the position arrangement of the first camera, facilitating the spatial layout of the first camera and the main board.

In some embodiments, the first circuit board passes out through a gap between the shielding plate and the antenna bracket. The GNSS receiver further comprises a first metal foil, and the first metal foil seals the gap.

The technical solution of the embodiments of the present disclosure provides a gap between the shielding plate and the antenna bracket to facilitate the first circuit board passing out through the gap. Meanwhile, the first metal foil is provided to seal the gap, reducing the risk of signal interference between the main board and the antenna through the gap.

In some embodiments, the antenna bracket is provided with an avoidance hole configured to avoid the adapter. The GNSS receiver further comprises a second metal foil, and the second metal foil seals the avoidance hole.

The technical solution of the embodiments of the present disclosure provides the avoidance hole corresponding to the adapter on the antenna bracket, reducing the risk of interference between the antenna bracket and the adapter. By providing the second metal foil to seal the avoidance hole, the risk of signal interference between the antenna and the main board through the avoidance hole is reduced.

In some embodiments, the GNSS receiver further comprises a second camera. The lower housing is provided with a second camera window. The second camera is disposed in the accommodating cavity and arranged corresponding to the second camera window.

The technical solution of the embodiments of the present disclosure provides the second camera window on the lower housing and arranges the second camera corresponding to the second camera window, so that the second camera and the first camera can perform imaging simultaneously. This increases the imaging range, reduces the risk that the GNSS receiver is affected by obstacles and the imaging effect is compromised, thereby enabling the GNSS receiver to have higher measurement data reliability, that is, higher camera measurement accuracy, thus improving the accuracy and reliability of the positioning and calculation results of the GNSS receiver.

In a second aspect, the present disclosure further provides a surveying and mapping device comprising a centering rod and the GNSS receiver according to any embodiment of the first aspect. The lower housing of the GNSS receiver is configured to connect to the centering rod.

The additional aspects and advantages of the present disclosure will be partly given in the following description, partly become apparent from the following description, or be learned through the practice of the present disclosure.

### BRIEF DESCRIPTION OF THE DRAWINGS

To more clearly illustrate the technical solutions of the embodiments of the present disclosure, a brief introduction of the drawings used in the embodiments is provided below. It should be understood that the following drawings only show some embodiments of the present disclosure, and therefore should not be construed as limiting the scope. For those skilled in the art, other relevant drawings can also be obtained based on these drawings without creative efforts.
Fig. 1 is a schematic diagram of a surveying and mapping device provided by some embodiments of the present disclosure.
Fig. 2 is a schematic diagram of the surveying and mapping device in fig. 1 from another perspective.
Fig. 3 is a schematic diagram of a circuit board in some embodiments.
Fig. 4 is a cross-sectional view taken along line a-a in fig. 2.
Fig. 5 is an enlarged view of portion b in fig. 4.
Fig. 6 is a schematic structural diagram of an antenna in fig. 4.
Fig. 7 is a schematic structural diagram of an antenna bracket in fig. 4.

Reference signs: 1-GNSS receiver; 10-accommodating cavity; 11-upper housing; 111-first camera window; 112-first camera; 113-lens; 12-lower housing; 121-second camera window; 122-second camera; 20-main board; 30-antenna; 31-first through hole; 40-antenna bracket; 41-second through hole; 42-bracket body; 43-protruding portion; 44-shielding plate; 45-first foam; 46-second foam; 47-gap; 48-avoidance hole; 50-adapter; 51-first circuit board; 52-second circuit board; 53-circuit board; 60-first metal foil; 61-second metal foil; 100-surveying and mapping device; 110-centering rod.

### DETAILED DESCRIPTION

To make the objectives, technical solutions, and advantages of the embodiments of the present disclosure clearer, the technical solutions in the embodiments of the present disclosure will be described clearly and completely below with reference to the drawings in the embodiments. It is apparent that the described embodiments are part of the embodiments of the present disclosure, rather than all of the embodiments. Based on the embodiments of the present disclosure, all other embodiments obtained by those of ordinary skill in the art without creative efforts fall within the protection scope of the present disclosure.

Unless otherwise defined, all technical and scientific terms used in the present disclosure have the same meanings as commonly understood by those skilled in the technical field of the present disclosure. The terms used in the specification of the present application are merely for the purpose of describing specific embodiments, and are not intended to limit the present disclosure. The terms "comprising" and "having" in the specification, claims, and the above description of the drawings, as well as any variations thereof, are intended to cover non-exclusive inclusion. The terms "first," "second," etc. in the specification and claims of the present disclosure or in the above drawings are used to distinguish different objects, rather than to describe a specific order or primary-secondary relationship.

In the present disclosure, the mention of "embodiments" means that specific features, structures, or characteristics described in connection with the embodiments can be included in at least one embodiment of the present disclosure. The appearance of this phrase in various places in the specification does not necessarily all refer to the same embodiment, nor are they independent or alternative embodiments mutually exclusive with other embodiments. It is explicitly and implicitly understood by those skilled in the art that the embodiments described in the present disclosure can be combined with other embodiments.

In the description of the present disclosure, it should be noted that, unless otherwise explicitly specified and limited, the terms "mounted," "connected," "attached" should be understood in a broad sense. For example, the connection can be a fixed connection, a detachable connection, or an integral connection. The elements can be directly connected, or indirectly connected through an intermediate medium, or can be internally communicated between two elements. For those of ordinary skill in the art, the specific meanings of the above terms in the present disclosure can be understood according to specific circumstances.

The term "and/or" in the present disclosure is merely a description of an association relationship between associated objects, indicating that three relationships can exist. For example, a and/or b can represent: a exists alone, both a and b exist simultaneously, and b exists alone. In addition, the character "/" in the present disclosure generally indicates an "or" relationship between the preceding and following associated objects.

The term "a plurality of" appearing in the present disclosure refers to two or more (including two). Similarly, "multiple" refers to two or more (including two), and "multiple pieces" refers to two or more pieces (including two pieces).

The GNSS receiver disclosed in the embodiments of the present disclosure can be used in, but is not limited to, fields such as navigation, aerospace, and geographic surveying.

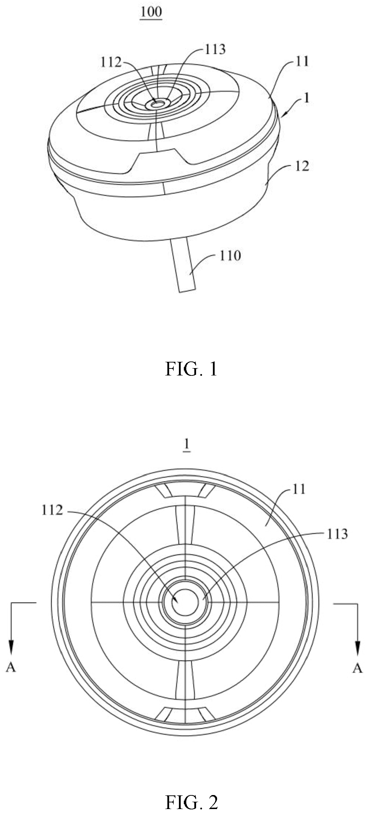

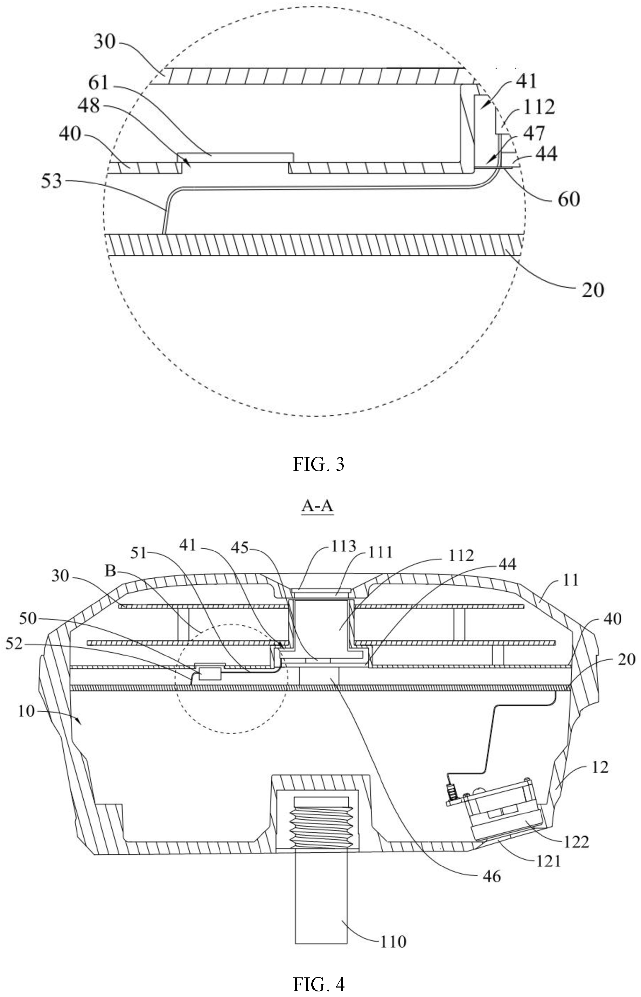

Please refer to fig. 1 to fig. 4. Fig. 1 is a schematic diagram of a surveying and mapping device provided by some embodiments of the present disclosure. Fig. 2 is a schematic diagram of the surveying and mapping device in fig. 1 from another perspective. Fig. 3 is a schematic diagram of a circuit board in some embodiments. Fig. 4 is a cross-sectional view taken along line a-a in fig. 2, wherein fig. 2 is a view from top to bottom in the vertical direction when the GNSS receiver is in use. The embodiments of the present disclosure provide a GNSS receiver 1. The GNSS receiver 1 comprises an upper housing 11, a lower housing 12, and a first camera 112. The upper housing 11 is connected to the lower housing 12 to form an accommodating cavity 10. The upper housing 11 is provided with a first camera window 111. The first camera 112 is disposed in the accommodating cavity 10 and arranged corresponding to the first camera window 111.

In some embodiments, the GNSS receiver 1 (Global Navigation Satellite System, GNSS for short) can combine satellite navigation and photogrammetry technology to obtain high-precision three-dimensional coordinates. By receiving signals transmitted from multiple satellites, processing and analyzing the signals, and then using the measurement data for position calculation, the GNSS receiver 1 is used for precision geodetic surveying and precision engineering surveying, among others.

In some embodiments, the upper housing 11 and the lower housing 12 can be connected by bolts or adhesive bonding, or can be connected by threading. The upper housing 11 and the lower housing 12 jointly define the accommodating cavity 10 that accommodates internal components of the GNSS receiver 1.

In some embodiments, the upper housing 11 and the lower housing 12 can be distinguished in the following way. When the GNSS receiver 1 is used for surveying, the lowest point of the lower housing 12 is located below the lowest point of the upper housing 11.

In some embodiments, the upper housing 11 is provided with a first camera window 111. The first camera window 111 can be a channel penetrating through the inner wall and the outer wall of the upper housing 11. The inner wall is the wall surface of the upper housing 11 facing the accommodating cavity 10, and the outer wall is the wall surface of the upper housing 11 away from the accommodating cavity 10.

In some embodiments, the first camera 112 and the first camera window 111 are arranged corresponding to each other, that is, the first camera 112 can image through the first camera window 111.

In some embodiments, the axis of the first camera 112 can coincide with the axis of the first camera window 111.

In some embodiments, when the GNSS receiver 1 is used for surveying, the first camera 112 can image upward, that is, the lens of the camera faces upward. Upward can mean vertically upward or tilted upward. In the following description, the up-down direction is described based on the state when the GNSS receiver 1 is used for surveying.

The technical solution of the embodiments of the present disclosure provides the first camera window 111 on the upper housing 11 and arranges the first camera 112 corresponding to the first camera window 111, so that the first camera 112 images through the first camera window 111 to enable the GNSS receiver 1 to acquire measurement data. This reduces the risk that the first camera 112 is affected by obstacles below the GNSS receiver 1 during imaging, thereby enabling the GNSS receiver 1 to have higher measurement data reliability, that is, higher camera measurement accuracy, thus improving the accuracy and reliability of the positioning and calculation results of the GNSS receiver 1.

Please refer to fig. 1 to fig. 4. In some embodiments, the first camera window 111 is disposed in a central area of the upper housing 11.

In some embodiments, the first camera window 111 can be disposed at the center of the upper housing 11, that is, the axis of the first camera window 111 can coincide with the axis of the upper housing 11. The central area of the upper housing 11 is the central area of the upper end surface of the upper housing 11.

In some embodiments, when the GNSS receiver 1 is used for surveying, the upper housing 11 is located above the lower housing 12.

The technical solution of the embodiments of the present disclosure disposes the first camera window 111 in the central area of the upper housing 11, so that the first camera 112 can acquire measurement data along the vertical direction during imaging. This reduces the risk that the first camera 112 is blocked by the upper housing 11 during imaging, thereby enabling the first camera 112 to have a wider imaging angle and improving the imaging range.

Please refer to fig. 1 to fig. 4. In some embodiments, the GNSS receiver 1 further comprises a lens 113, and the lens 113 is disposed at the first camera window 111.

In some embodiments, the lens 113 can be made of transparent glass or transparent plastic material.

In some embodiments, the lens 113 can be disposed at an end of the first camera window 111 away from the accommodating cavity 10 and seal the first camera window 111.

In some embodiments, the upper housing 11 can be provided with a recessed groove, the first camera window 111 penetrates through the bottom wall of the groove, and the lens 113 is disposed in the groove and seals the first camera window 111.

In some embodiments, the lens 113 can be disposed on the upper housing 11 by adhesive bonding. The type of glue can be waterproof glue.

The technical solution of the embodiments of the present disclosure disposes the lens 113 at the first camera window 111 to shield the first camera 112. On one hand, this reduces the risk that external impurities contaminate and affect the imaging effect, or the risk that the first camera 112 is damaged and affects the normal operation of the GNSS receiver 1. On the other hand, this reduces the probability that internal structures of the GNSS receiver 1 are exposed through the first camera window 111 and affect the appearance, improving the aesthetics of the GNSS receiver 1.

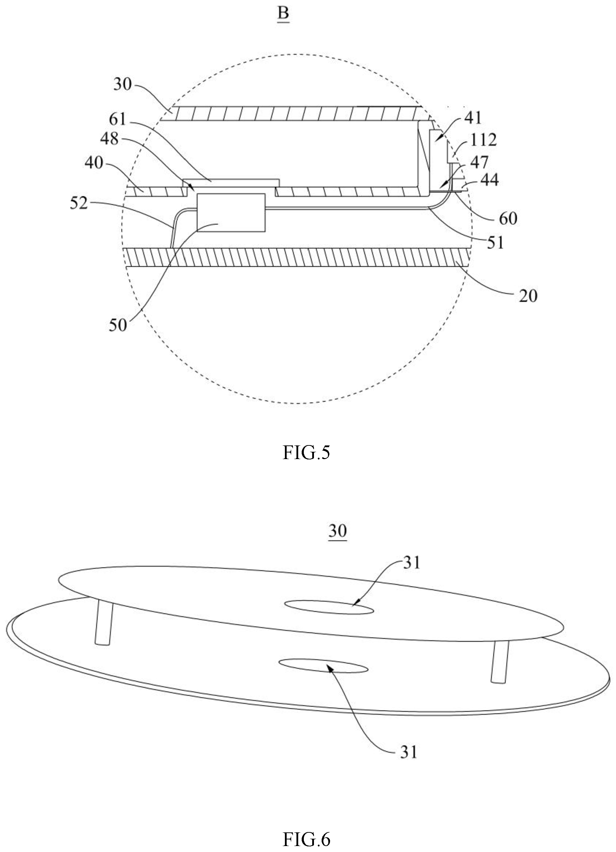

Please refer to fig. 1 to fig. 4, and additionally refer to fig. 5 and fig. 6. Fig. 5 is an enlarged view of portion b in fig. 4. Fig. 6 is a schematic structural diagram of an antenna in fig. 4. In some embodiments, the GNSS receiver 1 further comprises a main board 20 and an antenna 30. Both the main board 20 and the antenna 30 are disposed in the accommodating cavity 10. The first camera 112 is electrically connected to the main board 20. The antenna 30 is disposed on a side of the main board 20 facing the first camera window 111, and the antenna 30 is provided with a first through hole 31 through which the first camera 112 passes.

In some embodiments, the main board 20 can integrate multiple sensors and functional modules, and is configured to receive satellite signals and process photographic information of the first camera 112, so as to implement positioning, navigation, surveying, and other functions.

In some embodiments, the antenna 30 can receive satellite signals, convert the received signals into voltage signals or current signals, and track, process, and measure the received signals.

In some embodiments, during the use of the GNSS receiver 1, the upper housing 11 is located at the upper end of the lower housing 12. The antenna 30 can be disposed on the side of the main board 20 facing the first camera window 111, that is, the antenna 30 is disposed on the upper end of the main board 20.

In some embodiments, during the use of the GNSS receiver 1, the first camera 112 needs to be electrically connected to the main board 20 and the first camera 112 needs to image upward, and the antenna 30 needs to be disposed above the main board 20. Therefore, to facilitate the spatial arrangement of the first camera 112 and reduce the risk of interference between the first camera 112 and the antenna 30, the antenna 30 can be provided with the first through hole 31 through which the first camera 112 can pass.

In some embodiments, during the use of the GNSS receiver 1, the antenna 30 can be composed of two parts spaced apart in the vertical direction, and the two parts are connected by bolts or other means. The first through hole 31 can be composed of channels of the two parts, that is, the first through hole 31 can be composed of two discontinuous channels.

The technical solution of the embodiments of the present disclosure arranges the main board 20 to exchange information with the camera and arranges the antenna 30 to receive satellite positioning signals. Meanwhile, the antenna 30 is provided with the first through hole 31 to accommodate the first camera 112 passing through, reducing the risk of interference between the first camera 112 and the antenna 30 when the first camera 112 is arranged corresponding to the first camera window 111.

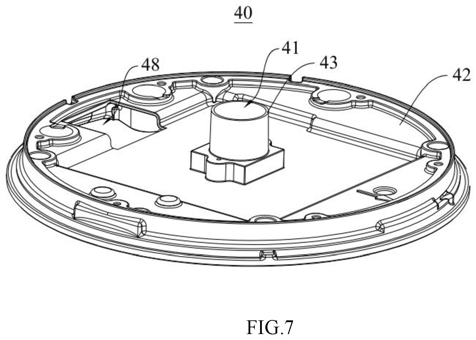

Please refer to fig. 1 to fig. 6, and refer to fig. 7. Fig. 7 is a schematic structural diagram of an antenna bracket in fig. 4. In some embodiments, the GNSS receiver 1 further comprises an antenna bracket 40. The antenna bracket 40 is disposed between the antenna 30 and the main board 20, and the antenna bracket 40 is provided with a second through hole 41 in which the first camera 112 is disposed.

In some embodiments, the antenna bracket 40 can be disposed between the antenna 30 and the main board 20, and the antenna bracket 40 can connect the antenna 30 and the main board 20 by bolts or other means.

In some embodiments, the antenna bracket 40 can be made of metal material, and the peripheral surface of the antenna bracket 40 can be fitted with the inner wall surface of the upper housing 11 or the inner wall surface of the lower housing 12, thereby isolating the antenna 30 and the main board 20 to reduce the risk of signal interference between the antenna 30 and the main board 20.

In some embodiments, the material of the antenna bracket 40 can be copper.

In some embodiments, during the use of the GNSS receiver 1, the first camera 112 needs to be electrically connected to the main board 20 and the first camera 112 needs to image upward, and the antenna bracket 40 needs to be disposed above the main board 20 and below the antenna 30. Therefore, to facilitate the spatial arrangement of the first camera 112 and reduce the risk of interference between the first camera 112 and the antenna bracket 40, the antenna bracket 40 can be provided with the second through hole 41 through which the first camera 112 can pass.

The technical solution of the embodiments of the present disclosure disposes the antenna bracket 40 between the antenna 30 and the main board 20, reducing the risk of signal interference between the main board 20 and the antenna 30. Meanwhile, the antenna bracket 40 is provided with the second through hole 41 to accommodate the first camera 112, reducing the risk of interference between the first camera 112 and the antenna bracket 40 when the first camera 112 is arranged corresponding to the first camera window 111.

Please refer to fig. 3 to fig. 7. In some embodiments, the antenna bracket 40 comprises a bracket body 42 and a protruding portion 43 connected to each other. The protruding portion 43 protrudes from a side of the bracket body 42 facing the antenna 30, and the protruding portion 43 passes through the first through hole 31. The second through hole 41 penetrates through the bracket body 42 and the protruding portion 43.

In some embodiments, the bracket body 42 can be a plate-shaped member disposed along the horizontal direction, and at least part of the antenna 30 can also be a plate-shaped member disposed along the horizontal direction. At least part of the antenna 30 can be fitted and connected to the bracket body 42.

In some embodiments, the protruding portion 43 can be in a sleeve shape and extend along the vertical direction, protruding from the side of the bracket body 42 facing the antenna 30. The protruding portion 43 has a channel, and the bracket body 42 also has a corresponding channel. The second through hole 41 penetrates through the bracket body 42 and the protruding portion 43, that is, the channel of the protruding portion 43 and the channel of the bracket body 42 together form the second through hole 41.

In some embodiments, the protruding portion 43 passes through the first through hole 31, and the first camera 112 is disposed in the second through hole 41. That is, a part of the first camera 112 is disposed in the channel of the protruding portion 43, that is, the part of the first camera 112 is disposed in the first through hole 31.

In some embodiments, a groove can be disposed on the side of the bracket body 42 facing the main board 20, and the second through hole 41 can penetrate through the bottom wall of the groove. One end of the first camera 112 can be disposed in the groove and fixedly connected to the bottom wall of the groove by bolts or other means, so as to improve the stability of the mounting of the first camera 112.

The technical solution of the embodiments of the present disclosure has the protruding portion 43 protruding from one side of the bracket body 42 and passing through the antenna 30, with the second through hole 41 penetrating through the bracket body 42 and the protruding portion 43. That is, when the first camera 112 is disposed in the first through hole 31, the protruding portion 43 is sleeved around the first camera 112, reducing the risk of damage to the first camera 112 and improving the reliability of the GNSS receiver 1.

Please refer to fig. 3 to fig. 5. In some embodiments, the first camera 112 is in clearance fit with the second through hole 41.

In some embodiments, the antenna bracket 40 is provided with the second through hole 41, and the second through hole 41 penetrates through the bracket body 42 and the protruding portion 43. The first camera 112 can be in clearance fit with the portion of the second through hole 41 corresponding to the bracket body 42, the first camera 112 can also be in clearance fit with the portion of the second through hole 41 corresponding to the protruding portion 43, or the first camera 112 can be in clearance fit with all portions of the second through hole 41.

The technical solution of the embodiments of the present disclosure achieves clearance fit between the first camera 112 and the second through hole 41, further reducing the risk of interference between the first camera 112 and the antenna bracket 40, thereby reducing the risk of damage to the first camera 112 and improving the reliability of the GNSS receiver 1.

Please refer to fig. 3 to fig. 5. In some embodiments, the GNSS receiver 1 further comprises a shielding plate 44, and the shielding plate 44 covers an end of the second through hole 41 close to the main board 20.

In some embodiments, the shielding plate 44 can be made of metal material.

In some embodiments, the shielding plate 44 can be made of metal copper.

The antenna bracket 40 is disposed between the antenna 30 and the main board 20, and is configured to isolate the antenna 30 and the main board 20, so as to reduce the risk of signal interference between the antenna 30 and the main board 20. The antenna bracket 40 is provided with the second through hole 41, that is, signal interference may occur between the antenna 30 and the main board 20 through the second through hole 41.

Therefore, in some embodiments, the shielding plate 44 is provided to cover the second through hole 41. The shielding plate 44 can be disposed at the end of the second through hole 41 close to the main board 20. A groove can be disposed on the side of the antenna bracket 40 facing the main board 20, and the second through hole 41 penetrates through the bottom wall of the groove. The shielding plate 44 can be disposed in the groove and can be disposed along the horizontal direction. Both ends of the shielding plate 44 in the horizontal direction abut against the inner wall of the groove, so that the shielding plate 44 can seal the second through hole 41.

In some embodiments, since the first camera 112 is disposed in the second through hole 41, and the first camera 112 needs to be connected to the main board 20 through a circuit board, that is, the circuit board needs to pass out of the second through hole 41. This technical solution is described in detail below. Therefore, the shielding plate 44 may not completely seal the second through hole 41, so as to leave a channel for the circuit board to pass through.

The technical solution of the embodiments of the present disclosure disposes the shielding plate 44 at the end of the second through hole 41 close to the main board 20, reducing the risk of signal interference between the main board 20 and the antenna 30 through the second through hole 41.

Please refer to fig. 3 and fig. 4. In some embodiments, the GNSS receiver 1 further comprises a first foam 45 and a second foam 46. One side of the shielding plate 44 is connected to the first camera 112 through the first foam 45, and the other side of the shielding plate 44 is connected to the main board 20 through the second foam 46.

In some embodiments, the first foam 45 and the second foam 46 can both be adhesive foams, which are essentially composite materials formed by bonding foam materials together using glue or adhesive.

In some embodiments, the side of the first camera 112 facing the main board 20 can be connected to the side of the shielding plate 44 away from the main board 20 through the first foam 45. The side of the main board 20 facing the first camera 112 is connected to the side of the shielding plate 44 facing the main board 20 through the second foam 46.

In some embodiments, the first foam 45 and the second foam 46 can be two independent identical members.

In some embodiments, the first foam 45 and the second foam 46 can be two parts of the same foam, that is, the first foam 45 and the second foam 46 can be one connected foam.

The technical solution of the embodiments of the present disclosure connects the first camera 112 and the shielding plate 44 through the first foam 45, and connects the main board 20 and the shielding plate 44 through the second foam 46. On one hand, this achieves positioning of the shielding plate 44, so that the shielding plate 44 can be fixed at the end of the second through hole 41 close to the main board 20, reducing the risk of signal interference between the main board 20 and the antenna 30. On the other hand, this achieves positioning of the first camera 112, reducing the risk of displacement of the first camera 112 affecting the imaging effect, and improving the accuracy and reliability of the positioning and calculation results of the GNSS receiver 1.

Please refer to fig. 3. In some embodiments, the GNSS receiver 1 further comprises a circuit board 53. One end of the circuit board 53 is connected to the first camera 112, and the other end of the circuit board 53 is connected to the main board 20.

In some embodiments, the circuit board 53 can be a flexible circuit board, or can be a wire or other electronic component capable of transmitting signals.

The technical solution of the embodiments of the present disclosure connects the first camera 112 and the main board 20 through the circuit board 53, thereby achieving information exchange between the first camera 112 and the main board 20.

Please refer to fig. 3 to fig. 5. In some embodiments, the GNSS receiver 1 further comprises an adapter 50. The circuit board 53 comprises a first circuit board 51 and a second circuit board 52. One end of the first circuit board 51 is connected to the first camera 112, and the other end of the first circuit board 51 is connected to the adapter 50. One end of the second circuit board 52 is connected to the adapter 50, and the other end of the second circuit board 52 is connected to the main board 20.

In some embodiments, the first circuit board 51 and the second circuit board 52 can both be flexible circuit boards, which can be freely bent and are configured to connect the first camera 112 and the main board 20, thereby achieving information exchange between the first camera 112 and the main board 20.

In some embodiments, one end of the first circuit board 51 can be connected to the first camera 112, and the other end can be connected to the adapter 50. One end of the second circuit board 52 can be connected to the adapter 50, and the other end can be connected to the main board 20. The adapter 50 can be an adapter device between circuit boards or between a circuit board and other equipment. The adapter 50 can be a cable, an adapter board, a connector, etc.

In some embodiments, the first circuit board 51 and the second circuit board 52 are both connected to the adapter 50, and the first circuit board 51 and the second circuit board 52 can transmit signals through the adapter 50, thereby achieving information exchange between the first camera 112 and the main board 20.

In some embodiments, when the length dimension of the first circuit board 51 or the second circuit board 52 is sufficient, the first camera 112 can be directly connected to the main board 20 through the first circuit board 51 or the second circuit board 52.

In some embodiments, when the length dimension of the first circuit board 51 or the second circuit board 52 is limited, the number of adapters 50 can be multiple, and the GNSS receiver 1 further has other circuit boards. One end of the first circuit board 51 can be connected to the first camera 112, and the other end can be connected to one end of a first other circuit board. The other end of the other circuit board is connected to a first adapter 50. One end of a second other circuit board is connected to the first adapter 50, and the other end of the second other circuit board is connected to a second adapter 50. One end of the second circuit board 52 can be connected to the second adapter 50, and the other end of the second circuit board 52 can be connected to the main board 20, thereby achieving information exchange between the first camera 112 and the main board 20.

The technical solution of the embodiments of the present disclosure connects the first circuit board 51 and the second circuit board 52 through the adapter 50, thereby achieving information exchange between the first camera 112 and the main board 20. This reduces the risk that the limited length of a single circuit board affects the position arrangement of the first camera 112, facilitating the spatial layout of the first camera 112 and the main board 20.

Please refer to fig. 3 to fig. 5. In some embodiments, the first circuit board 51 passes out through a gap 47 between the shielding plate 44 and the antenna bracket 40. The GNSS receiver 1 further comprises a first metal foil 60, and the first metal foil 60 seals the gap 47.

In some embodiments, to facilitate the first circuit board 51 passing out of the second through hole 41 after being connected to the first camera 112, the gap 47 exists between the shielding plate 44 and the antenna bracket 40. That is, the shielding plate 44 is disposed along the horizontal direction, and the bracket body 42 can be provided with a groove. The second through hole 41 penetrates through the bottom wall of the groove. One end of the shielding plate 44 in the horizontal direction abuts against the wall surface of the groove, and the other end is spaced apart from the wall surface of the groove, so as to define the gap 47.

In some embodiments, the first camera 112 is disposed in the second through hole 41. One end of the first circuit board 51 extends into the second through hole 41 and is connected to the first camera 112, and the other end of the first circuit board 51 passes out through the gap 47 and is connected to the adapter 50 or other members. That is, the gap 47 is an avoidance channel for accommodating the first circuit board 51 to pass through, making the spatial arrangement more reasonable and reducing the risk of damage to the first circuit board 51.

In some embodiments, the first metal foil 60 can be bonded to the shielding plate 44 and the bracket body 42 by adhesion, so as to seal the gap 47.

In some embodiments, the first metal foil 60 can be made of metal copper.

The technical solution of the embodiments of the present disclosure provides the gap 47 between the shielding plate 44 and the antenna bracket 40, thereby facilitating the first circuit board 51 passing out through the gap 47. Meanwhile, the first metal foil 60 is provided to seal the gap 47, reducing the risk of signal interference between the main board 20 and the antenna 30 through the gap 47.

Please refer to fig. 3 to fig. 5. In some embodiments, the antenna bracket 40 is provided with an avoidance hole 48 configured to avoid the adapter 50. The GNSS receiver 1 further comprises a second metal foil 61, and the second metal foil 61 seals the avoidance hole 48.

In some embodiments, the antenna bracket 40 is provided with the avoidance hole 48 configured to avoid the adapter 50. In the vertical direction, the avoidance hole 48 and the adapter 50 are arranged corresponding to each other.

In some embodiments, the antenna bracket 40 can be fitted and connected to a part of the surface of the main board 20. The adapter 50 is disposed on the side of the main board 20 facing the first camera 112. In the vertical direction, the adapter 50 has a certain dimension, and the adapter 50 is prone to interfere with the main board 20 or the antenna bracket 40, thereby damaging the adapter 50, the main board 20, or the antenna bracket 40. Therefore, the avoidance hole 48 is provided on the antenna bracket 40.

In some embodiments, the avoidance hole 48 can be a through hole penetrating through two end surfaces of the bracket body 42 in the vertical direction. The avoidance hole 48 can also be a groove disposed on the end surface of the bracket body 42 facing the main board 20, wherein there is a gap between the bottom wall of the groove and the adapter 50.

In some embodiments, the avoidance hole 48 is a through hole penetrating through two end surfaces of the bracket body 42 in the vertical direction. Signal interference may occur between the antenna 30 and the main board 20 through the avoidance hole 48. Therefore, the second metal foil 61 is provided to seal the avoidance hole 48. The second metal foil 61 can be disposed on the end surface of the bracket body 42 away from the main board 20, so as to seal the end of the avoidance hole 48 away from the main board 20.

In some embodiments, the second metal foil 61 can be disposed on the bracket body 42 by adhesion.

In some embodiments, the material of the second metal foil 61 and the first metal foil 60 can be the same.

In some embodiments, the second metal foil 61 can be made of metal copper.

The technical solution of the embodiments of the present disclosure provides the avoidance hole 48 corresponding to the adapter 50 on the antenna bracket 40, reducing the risk of interference between the antenna bracket 40 and the adapter 50. By providing the second metal foil 61 to seal the avoidance hole 48, the risk of signal interference between the antenna 30 and the main board 20 through the avoidance hole 48 is reduced.

Please refer to fig. 3 and fig. 4. In some embodiments, the GNSS receiver 1 further comprises a second camera 122. The lower housing 12 is provided with a second camera window 121. The second camera 122 is disposed in the accommodating cavity 10 and arranged corresponding to the second camera window 121.

In some embodiments, the lower housing 12 can be provided with the second camera window 121, and the GNSS receiver 1 can be provided with a second camera 122 corresponding to the second camera window 121. The second camera 122 can be electrically connected to the main board 20.

In some embodiments, when the GNSS receiver 1 is used for surveying, the second camera 122 can image through the second camera window 121, and the second camera 122 can image downward. Downward imaging can mean imaging vertically downward, or the imaging angle can have an angle with respect to the vertical direction, that is, imaging downward at an incline.

In some embodiments, the number of the second cameras 122 and the second camera windows 121 can both be multiple. One of the second cameras 122 can image vertically downward, and one of the second cameras 122 can image downward at an incline.

The technical solution of the embodiments of the present disclosure provides the second camera window 121 on the lower housing 12 and arranges the second camera 122 corresponding to the second camera window 121, so that the second camera 122 and the first camera 112 can perform imaging simultaneously. This increases the imaging range, reduces the risk that the GNSS receiver 1 is affected by obstacles and the imaging effect is compromised, thereby enabling the GNSS receiver 1 to have higher measurement data reliability, that is, higher camera measurement accuracy, thus improving the accuracy and reliability of the positioning and calculation results of the GNSS receiver 1.

Please refer to fig. 1 and fig. 4. The embodiments of the present disclosure further provide a surveying and mapping device 100 comprising a centering rod 110 and the GNSS receiver 1 according to any embodiment of the first aspect. The lower housing 12 of the GNSS receiver 1 is configured to connect to the centering rod 110.

In some embodiments, the centering rod 110 can be connected to the central area of the lower housing 12. That is, in the vertical direction, the portion of the centering rod 110 connected to the lower housing 12 corresponds to the first camera window 111.

In some embodiments, when the GNSS receiver 1 is used for imaging, the centering rod 110 is used to lift the GNSS receiver 1 upward, so that the upper housing 11 is located above the lower housing 12, and the first camera 112 images upward.

In some embodiments, the lower housing 12 can be provided with a connection hole matching the connection end of the centering rod 110, and the connection end of the centering rod 110 is threadedly connected to the connection hole.

Although the present disclosure has been described with reference to preferred embodiments, various improvements can be made and equivalents can be used to replace components without departing from the scope of the present disclosure. In particular, as long as there is no structural conflict, the technical features mentioned in the various embodiments can be combined in any manner. The present disclosure is not limited to the specific embodiments disclosed herein, but includes all technical solutions falling within the scope of the claims.

### Industrial applicability

By adopting the above solution, the imaging range is increased, and the risk that the GNSS receiver is affected by obstacles and the imaging effect is compromised is reduced, thereby enabling the GNSS receiver to have higher measurement data reliability, that is, higher camera measurement accuracy, thus improving the accuracy and reliability of the positioning and calculation results of the GNSS receiver.

## Claims

1. A GNSS receiver, comprising an upper housing, a lower housing, and a first camera, wherein the upper housing is connected to the lower housing to form an accommodating cavity, the upper housing is provided with a first camera window, and the first camera is disposed in the accommodating cavity and arranged corresponding to the first camera window.

2. The GNSS receiver according to claim 1, wherein the first camera window is disposed in a central area of the upper housing.

3. The GNSS receiver according to claim 1 or 2, wherein the GNSS receiver further comprises a lens, and the lens is disposed at the first camera window.

4. The GNSS receiver according to any one of claims 1-3, wherein the GNSS receiver further comprises a main board and an antenna, both the main board and the antenna are disposed in the accommodating cavity, the first camera is electrically connected to the main board, the antenna is disposed on a side of the main board facing the first camera window, and the antenna is provided with a first through hole through which the first camera passes.

5. The GNSS receiver according to claim 4, wherein the GNSS receiver further comprises an antenna bracket, the antenna bracket is disposed between the antenna and the main board, the antenna bracket is provided with a second through hole, and the first camera is disposed in the second through hole.

6. The GNSS receiver according to claim 5, wherein the antenna bracket comprises a bracket body and a protruding portion connected to each other, the protruding portion protrudes from a side of the bracket body facing the antenna, the protruding portion passes through the first through hole, and the second through hole penetrates through the bracket body and the protruding portion.

7. The GNSS receiver according to claim 5 or 6, wherein the first camera is in clearance fit with the second through hole.

8. The GNSS receiver according to any one of claims 5-7, wherein the GNSS receiver further comprises a shielding plate, and the shielding plate covers an end of the second through hole close to the main board.

9. The GNSS receiver according to claim 8, wherein the GNSS receiver further comprises a first foam and a second foam, one side of the shielding plate is connected to the first camera through the first foam, and the other side of the shielding plate is connected to the main board through the second foam.

10. The GNSS receiver according to any one of claims 4-9, wherein the GNSS receiver further comprises a circuit board, one end of the circuit board is connected to the first camera, and the other end of the circuit board is connected to the main board.

11. The GNSS receiver according to claim 10, wherein the GNSS receiver further comprises an adapter, the circuit board comprises a first circuit board and a second circuit board, one end of the first circuit board is connected to the first camera, the other end of the first circuit board is connected to the adapter, one end of the second circuit board is connected to the adapter, and the other end of the second circuit board is connected to the main board.

12. The GNSS receiver according to claim 11, wherein the first circuit board passes out through a gap between the shielding plate and the antenna bracket, the GNSS receiver further comprises a first metal foil, and the first metal foil seals the gap.

13. The GNSS receiver according to any one of claims 5-12, wherein the antenna bracket is provided with an avoidance hole configured to avoid the adapter, the GNSS receiver further comprises a second metal foil, and the second metal foil seals the avoidance hole.

14. The GNSS receiver according to any one of claims 1-13, wherein the GNSS receiver further comprises a second camera, the lower housing is provided with a second camera window, the second camera is disposed in the accommodating cavity, and the second camera is arranged corresponding to the second camera window.

15. A surveying and mapping device, comprising:
a centering rod; and
and the GNSS receiver according to any one of claims 1-14, wherein the lower housing of the GNSS receiver is configured to connect to the centering rod.
